# EUROPÄISCHE PATENTSCHRIFT

(11) **EP 2 651 043 B1**
(45) Veröffentlichungstag und Bekanntmachung des Hinweises auf die Patenterteilung: **25.10.2017**
(21) Anmeldenummer: 13154379.5
(22) Anmeldetag: 07.02.2013
(51) Int. Cl.: H04B 3/54, H04L 12/10, H04L 12/40

(54) **Vorrichtung und Verfahren zur Übertragung von Energie und Daten zwischen einer Steuerungseinheit und einem Positionsmessgerät**
Device and method for transferring energy and data between a control unit and a position measurement device
Dispositif et procédé de transmission d'énergie et de données entre une unité de commande et un appareil de mesure de position

(30) Priorität: 10.04.2012 DE 102012205802
(43) Veröffentlichungstag der Anmeldung: 16.10.2013
(73) Patentinhaber: Dr. Johannes Heidenhain GmbH, 83301 Traunreut (DE)
(72) Erfinder: Beaury, Bernhard, 83236 Übersee (DE); Hofbauer, Hermann, 83308 Trostberg (DE); Mooshammer, Markus, 83278 Traunstein (DE); Strasser, Erich, 83308 Trostberg (DE); Thielicke, Ernst, Dr., 83278 Traunstein (DE); Tondorf, Sebastian, Dr., 83329 Waging am See (DE)

(56) Entgegenhaltungen:
- EP-A1- 1 372 270
- EP-A2- 0 386 659
- GB-A- 2 484 727
- US-A1- 2005 248 440

## Beschreibung

Die Erfindung betrifft eine Vorrichtung zur Übertragung von Energie und Daten zwischen einer Steuerungseinheit und einem Positionsmessgerät nach Anspruch 1, sowie ein Verfahren zur Übertragung von Energie und Daten zwischen einer Steuerungseinheit und einem Positionsmessgerät nach Anspruch 5. Mittels einer derartigen Vorrichtung, bzw. eines erfindungsgemäßen Verfahrens, ist der Betrieb eines Positionsmessgeräts an einer Steuerungseinheit über ein einziges Leitungspaar möglich.

In der Automatisierungstechnik werden vermehrt Positionsmessgeräte eingesetzt, die einen digitalen, absoluten Positionswert zur Verfügung stellen. Häufig sind derartige Positionsmessgeräte auch programmierbar ausgeführt, d.h. sie umfassen beispielsweise Speichereinheiten, von denen Speicherinhalte gelesen, bzw. in die Speicherinhalte geschrieben werden können. Speicherinhalte können z.B. Kalibierdaten oder Konfigurationsdaten sein. Darüber hinaus können im Positionsmessgerät noch Sensoren zur Messung weiterer Parameter vorgesehen sein, etwa zur Messung der Temperatur. Für die Übertragung digitaler Daten, insbesondere der absoluten Positionswerte, kommen hauptsächlich serielle Datenschnittstellen zum Einsatz, da diese mit verhältnismäßig wenigen Datenübertragungsleitungen auskommen und trotzdem hohe Datenübertragungsraten aufweisen.

Ein wichtiger Kostenfaktor beim Anschluss von Positionsmessgeräten an eine Steuerungseinheit, beispielsweise eine Werkzeugmaschinensteuerung, ist die Anzahl der für den Betrieb benötigten elektrischen Leitungen, da diese maßgeblich den Preis der eingesetzten hochwertigen Datenkabel bestimmen. So benötigen beispielsweise klassische synchron-serielle Schnittstellen mit differentieller Signalübertragung (z.B. nach dem RS-485-Standard) für die Übertragung von Takt- und Datensignalen je zwei Leitungen. Für die Stromversorgung des Positionsmessgeräts müssen noch einmal zwei Leitungen vorgesehen werden. Es werden also insgesamt sechs Leitungen benötigt. Als Beispiel sei hier die EP 0 660 209 B2 genannt.

Um unter Beibehaltung der aufgrund ihrer niedrigen Störanfälligkeit und der hohen erreichbaren Datenübertragungsraten besonders vorteilhaften differentiellen Signalübertragung die Anzahl der benötigten Leitungen zu reduzieren, schlägt die DE 10 2008 027 902 A1 vor, auf die Übertragung eines Taktsignals zu verzichten und die Datenübertragung lediglich über ein bidirektional betriebenes Leitungspaar durchzuführen. Zusammen mit den Leitungen zur Stromversorgung sind hier also nur noch vier Leitungen vorzusehen.

Die EP 1 372 270 A1, GB 2484727 A und die EP 0 386 659 A2 beschreiben Varianten, in denen die Übertragung von Energie und Daten abwechselnd über ein Leitungspaar erfolgt.

Es ist Aufgabe der Erfindung, eine verbesserte Vorrichtung zur Übertragung von Energie und Daten zwischen einem Positionsmessgerät und einer Steuerungseinheit über ein Leitungspaar bereitzustellen.

Diese Aufgabe wird gelöst durch eine Vorrichtung nach Anspruch 1. Vorteilhafte Details der Vorrichtung ergeben sich aus den von Anspruch 1 abhängigen Ansprüchen.

Es wird nun eine Vorrichtung zur Übertragung von Energie und Daten zwischen einer Steuerungseinheit und einem Positionsmessgerät über nur ein Leitungspaar vorgeschlagen, wobei die Übertragung von Energie in einem Lademodus und die Übertragung von Daten in einem Kommunikationsmodus erfolgt, wobei im Positionsmessgerät ein Energiespeicher vorgesehen ist, der im Lademodus über das Leitungspaar aufladbar ist und mit dem das Positionsmessgerät im Kommunikationsmodus mit Energie versorgbar ist und in der Steuerungseinheit eine Ladeeinheit vorgesehen ist, sowie Schaltmittel, über die im Lademodus die Ladeeinheit mit dem Leitungspaar zweipolig verbindbar ist.

Weiter ist es Aufgabe der Erfindung, ein verbessertes Verfahren zur Übertragung von Energie und Daten zwischen einem Positionsmessgerät und einer Steuerungseinheit über ein Leitungspaar anzugeben.

Diese Aufgabe wird gelöst durch ein Verfahren nach Anspruch 5. Vorteilhafte Details des Verfahrens ergeben sich aus den von Anspruch 5 abhängigen Ansprüchen.

Hierzu wird ein Verfahren zur Übertragung von Energie und Daten zwischen einer Steuerungseinheit und einem Positionsmessgerät über nur ein Leitungspaar vorgeschlagen, wobei die Übertragung von Energie in einem Lademodus und die Übertragung von Daten in einem Kommunikationsmodus erfolgt, wobei im Positionsmessgerät ein Energiespeicher vorgesehen ist, der im Lademodus über das Leitungspaar aufgeladen wird und mit dem das Positionsmessgerät im Kommunikationsmodus mit Energie versorgt wird und in der Steuerungseinheit eine Ladeeinheit vorgesehen ist, sowie Schaltmittel, über die im Lademodus die Ladeeinheit mit dem Leitungspaar zweipolig verbunden wird.

Weitere Vorteile sowie Einzelheiten der vorliegenden Erfindung ergeben sich aus der nachfolgenden Beschreibung anhand der Figuren. Dabei zeigt
- Figur 1: ein Blockdiagramm einer erfindungsgemäßen Vorrichtung,
- Figur 2: ein Signaldiagramm mit Signalverläufen der Spannungen auf dem Leitungspaar und
- Figur 3: ein Blockschaltbild einer bevorzugten Ausführungsform einer Ladeeinheit.

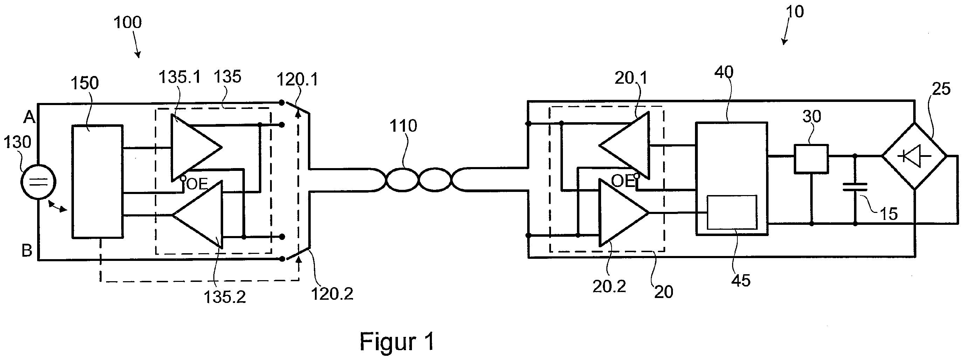

Figur 1 zeigt ein Blockdiagramm einer Vorrichtung zur Übertragung von Energie und Daten zwischen einem Positionsmessgerät 10 und einer Steuerungseinheit 100 über ein einziges Leitungspaar 110.

Der vorliegenden Erfindung liegt das Prinzip zugrunde, dass zuerst über das eine Leitungspaar 110 in einem Lademodus Energie zum Positionsmessgerät 10 übertragen und dort in einem Energiespeicher 15, bei dem es sich typischerweise um einen Kondensator, beispielsweise einen Keramikkondensator oder einen Elektrolytkondensator, handelt, gespeichert wird. Anschließend erfolgt in einem Kommunikationsmodus eine Kommunikation zwischen der Steuerungseinheit 100 und dem Positionsmessgerät 10, ebenfalls über das Leitungspaar 110. Im Kommunikationsmodus erfolgt die Energieversorgung des Positionsmessgeräts 10 aus dem Energiespeicher 15.

Zur Umschaltung zwischen Lade- und Kommunikationsmodus sind auf Seiten der Steuerungseinheit 100 Schaltmittel in Form von Schaltelementen 120.1, 120.2 vorgesehen, über die das Leitungspaar 110 im Lademodus mit einer Ladeeinheit 130 verbindbar ist. Als Schaltelemente 120.1, 120.2 kommen mit Vorteil elektronische Schalter, z.B. MOSFET-Transistoren zum Einsatz.

Bei der Ladeeinheit 130 handelt es sich im einfachsten Fall um ein Netzteil, bzw. eine von einem zentralen Netzteil ausgegebene Versorgungsspannung, die beispielsweise in der Steuerungseinheit 100 auch zur Versorgung anderer Baugruppen dient. Außerdem ist mit Vorteil eine Strombegrenzungsschaltung und/oder Sicherung vorgesehen, um den Ausgangsstrom im Fehlerfall zu begrenzen oder abzuschalten. Darüber hinaus kann die Ladeeinheit 130 auch weitergehende Funktionen umfassen, wie beispielsweise die Möglichkeit, die Polarität der zum Positionsmessgerät 10 ausgegebenen Ladespannung umzuschalten.

Für die Kommunikation mit dem Positionsmessgerät 10 über das Leitungspaar 110 ist eine Kommunikationseinheit 135 vorgesehen. Sie umfasst einen differentiellen Sendebaustein 135.1, sowie einen differentiellen Empfängerbaustein 135.2, die so geschaltet sind, dass sie für einen bidirektionalen Datenaustausch geeignet sind. Hierfür ist insbesondere am Sendebaustein 135.1 eine Freigabeleitung OE vorgesehen, die eine Aktivierung/Deaktivierung des Ausgangs des Sendebausteins 135.1 erlaubt. Sendebaustein 135.1 und Empfängerbaustein 135.2 entsprechen beispielsweise der Spezifikation des bekannten RS-485-Standards.

Im dargestellten Beispiel sind die Schaltelemente 120.1, 120.2 als Umschalter ausgelegt, so dass die Kommunikationseinheit 135 im Lademodus vom Leitungspaar 110 getrennt ist. Es sei an dieser Stelle darauf hingewiesen, dass das nicht zwingend notwendig ist. Ist beispielsweise die Eingangsschaltung der Kommunikationseinheit 135 so dimensioniert, dass die maximale im Lademodus zu erwartende Spannung innerhalb des Toleranzbereichs der Eingangsspannung der Kommunikationseinheit 135 liegt, so kann die Kommunikationseinheit 135 auch während des Lademodus mit dem Leitungspaar 110 verbunden bleiben. In diesem Fall können die Schaltelemente 120.1, 120.2 als einfache Schließer ausgeführt werden.

Zur Steuerung aller Abläufe umfasst die Steuerungseinheit 100 eine zentrale Verarbeitungseinheit 150. Die Verarbeitungseinheit 150 steuert insbesondere die Kommunikation zwischen der Steuerungseinheit 100 und der Positionsmesseinheit 10 (Übertragen von Befehlen und ggf. Daten zur Kommunikationseinheit 135, Empfangen und Verarbeiten von Daten von der Kommunikationseinheit 135, Einstellen der Datenrichtung der Kommunikationseinheit 135 durch Aktivierung/Deaktivierung des Sendebausteins 135.1), sowie die Umschaltung zwischen Lade- und Kommunikationsmodus. Außerdem kontrolliert die Verarbeitungseinheit 150 den Ladevorgang des Energiespeichers 15 durch Ansteuerung der Ladeeinheit 130 und ggf. Schalten der Schaltelemente 120.1, 120.2.

Die Verarbeitungseinheit 40 kann ganz oder teilweise als hochintegrierter programmierbarer Baustein, beispielsweise in Form eines FPGA, ausgeführt sein und kann auch einen Mikroprozessor oder Mikrocontroller umfassen.

Im Positionsmessgerät 10 ist ebenfalls eine Kommunikationseinheit 20 angeordnet, die weitgehend identisch zu der steuerungsseitigen Kommunikationseinheit 135 aufgebaut ist. Sie umfasst somit einen differentiellen Sendebaustein 20.1, sowie einen differentiellen Empfängerbaustein 20.2. Der Sendebaustein 20.1 kann wiederum über eine Freigabeleitung OE aktiviert/deaktiviert werden. In diesem bevorzugten Ausführungsbeispiel ist die messgeräteseitige Kommunikationseinheit 20 so dimensioniert, dass die maximale Ladespannung, die im Lademodus zum Positionsmessgerät 10 gelangt, innerhalb des Eingangsspannungsbereichs der Kommunikationseinheit 20 liegt. Dies ist aus zwei Gründen besonders vorteilhaft: zum einen kann die Kommunikationseinheit 20 auch während des Lademodus mit dem Leitungspaar 110 verbunden bleiben, es müssen also keine Schalter vorgesehen werden, um die Kommunikationseinheit 20 im Lademodus vom Leitungspaar 110 zu trennen. Zum anderen wandelt der Empfängerbaustein 20.2 die Ladespannung in ein digitales Signal um, das, wie im folgenden noch genauer ausgeführt ist, im Positionsmessgerät 10 verwendet werden kann, den Übergang vom Lademodus in den Kommunikationsmodus zu erkennen.

Zum Laden des Energiespeichers 15 ist im Positionsmessgerät 10 eine Gleichrichtereinheit 25 vorgesehen, deren Eingang mit dem Leitungspaar 110 und deren Ausgang mit dem Energiespeicher 15 verbunden ist. Die Gleichrichtereinheit 25 ist mit Vorteil als Brückengleichrichter aufgebaut, so dass die Aufladung des Energiespeichers 15 unabhängig von der Polarität der Ladespannung erfolgt. Darüber hinaus wirkt der Brückengleichrichter während der differentiellen Datenübertragung auf dem Leitungspaar 110 im Kommunikationsmodus wie eine zweipolige Abschaltung der Gleichrichtereinheit 25 vom Leitungspaar 110, weil alle Dioden des Brückengleichrichters bezogen auf das mit ihm verbundene Leitungspaar 110 in Sperrrichtung betrieben werden.

Dem Energiespeicher 15 ist eine Spannungswandlereinheit 30 nachgeschaltet, die aus der Spannung des Energiespeichers 15, die prinzipbedingt Schwankungen unterliegt, wenigstens eine stabile Versorgungsspannung für eine zentrale Positionserfassungseinheit 40 erzeugt. Als Spannungswandlereinheit 30 kann beispielsweise ein DC/DC-Wandler eingesetzt werden.

Die Positionserfassungseinheit 40 umfasst alle Funktionseinheiten des Positionsmessgeräts 10, die zur Generierung von Messwerten und zur Steuerung der Kommunikation mit der Steuerungseinheit 100 benötigt werden, wie z.B. Detektoren zur Messung von positionsabhängigen Signalen, die durch Abtastung einer Maßverkörperung entstehen, eine Signalverarbeitungseinheit zur Korrektur, Aufbereitung und Umwandlung der positionsabhängigen Signale in digitale Positionswerte, eine Schnittstelleneinheit zur Kommunikation über die Kommunikationseinheit 20 mit der Steuerungseinheit 100, insbesondere zur Übertragung der digitalen Positionswerte zur Steuerungseinheit 100. Darüber hinaus können auch noch Speichereinheiten vorgesehen sein, die ebenfalls von der Steuerungseinheit 100 gelesen und/oder programmiert werden können. Beispiele für derartige Funktionseinheiten können beispielsweise der EP 0 660 209 B2 entnommen werden.

Da im Normalbetrieb des Positionsmessgeräts 10 kontinuierlich zwischen dem Lademodus und dem Kommunikationsmodus hin und her geschaltet wird, ist in der Positionserfassungseinheit 40 eine Auswerteeinheit 45 vorgesehen, die die digitalen Signale, die von der Empfängereinheit 20.2 bei der Positionserfassungseinheit 40 eintreffen, auswertet und durch Feststellen bestimmter Signalmuster den Zeitpunkt der Umschaltung vom Lademodus zum Kommunikationsmodus erkennt. Dadurch können Funktionseinheiten der Positionserfassungseinheit 40, die während des Lademodus nicht benötigt werden, nach Abschluss des Kommunikationsmodus abgeschaltet, oder in einen Stromsparbetrieb versetzt und erst dann wieder aktiviert werden, wenn die Auswerteeinheit 45 das Ende des Lademodus signalisiert. Auf diese Weise kann die Stromaufnahme des Positionsmessgeräts 10 signifikant reduziert werden, was sich sehr vorteilhaft auf die Dimensionierung des Energiespeichers auswirkt.

Die Positionserfassungseinheit 40 kann ganz oder teilweise als hochintegrierter Baustein, beispielsweise in Form eines FPGA oder ASIC, ausgeführt sein und kann unter anderem einen Mikroprozessor oder Mikrocontroller umfassen.

Die Kommunikation zwischen der zentralen Verarbeitungseinheit 150 in der Steuerungseinheit 100 und der Positionserfassungseinheit 40 im Positionsmessgerät 10 über die steuerungsseitige Kommunikationseinheit 135, das Leitungspaar 110 und die Kommunikationseinheit 20 im Positionsmessgerät 10 während des Kommunikationsmodus kann beispielsweise wie in der DE 10 2008 027 902 A1 beschrieben erfolgen, auf die an dieser Stelle ausdrücklich Bezug genommen wird.

Besonders hervorzuheben ist, dass bei einer erfindungsgemäßen Vorrichtung während des Kommunikationsmodus der elektrischen Schaltung des Positionsmessgeräts 10 von der Steuerungseinheit 100 kein elektrisches Bezugspotential (Massepotential) zugeführt wird. Das erklärt sich ganz einfach dadurch, dass die einzige elektrische Verbindung zwischen der Steuerungseinheit 100 und dem Positionsmessgerät 10 das Leitungspaar 110 ist, das während des Kommunikationsmodus ausschließlich zur differentiellen Datenübertragung verwendet wird. Dies hat zur Konsequenz, dass sich das Positionsmessgerät 10 während des Kommunikationsmodus wie ein batteriebetriebenes Gerät verhält. Bekannte Probleme, wie die Einstrahlung von Störsignalen auf die Versorgungsspannung, sowie Masseschleifen, können also prinzipbedingt erst gar nicht auftreten.

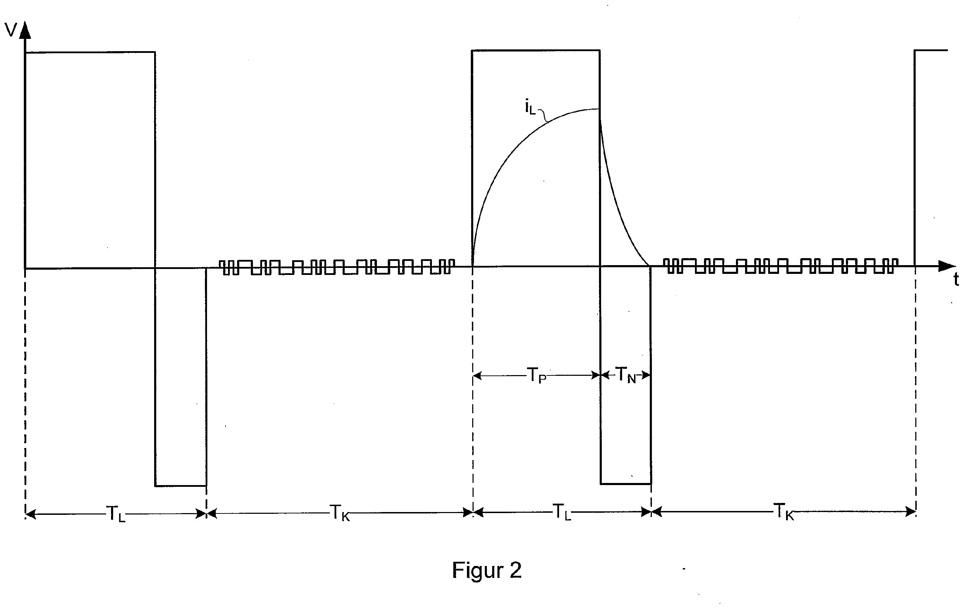

Figur 2 zeigt einen vereinfachten Signalverlauf der Spannungen zwischen den Leitungen des Leitungspaars 110. Während der mit T_{L} bezeichneten Zeiten befindet sich die Vorrichtung im Lademodus, während der mit T_{K} bezeichneten Zeiten im Kommunikationsmodus. Im zweiten dargestellten Lademodus ist zusätzlich der Ladestrom i_{L} idealisiert dargestellt. Sowohl die Signalamplituden, als auch die Pulsbreiten sind nicht maßstäblich und dienen lediglich dazu, die vorliegende Erfindung verständlich zu beschreiben.

Wie Figur 2 zu entnehmen ist, ist der Lademodus in zwei Phasen aufgeteilt, eine Phase T_{P}, während der am Leitungspaar 110 eine positive Spannung anliegt und eine Phase T_{N}, während der am Leitungspaar 110 eine negative Spannung anliegt. Diese besondere Signalführung ist deshalb so vorteilhaft, weil das Leitungspaar 110 in der Praxis natürlich auch wie eine Induktivität wirkt. Das bedeutet, dass eine Abschaltung der Ladespannung zu einem Zeitpunkt, an dem noch ein signifikanter Ladestrom i_{L} fließt, eine Gegeninduktionspannung zur Folge hat, die eine erhebliche Amplitude erreichen kann, die unter Umständen sogar zerstörerische Wirkung entfalten kann. Nachdem andererseits der Lademodus jedoch so wenig Zeit wie möglich in Anspruch nehmen soll, damit der zeitliche Abstand zwischen zwei Kommunikationsmodi (was in der Praxis dem zeitlichen Abstand zwischen zwei Positionsabfragen der Steuerungseinheit 100 vom Positionsmessgerät 10 entspricht), so kurz wie möglich ist, ist es auch nicht praktikabel, den Lademodus solange auszudehnen, bis der Ladestrom des Energiespeichers 15 auf einen unkritischen Wert absinkt. Das Umpolen der Ladespannung nach der Zeit T_{P} bewirkt nun ein kontrolliertes Absinken des Ladestroms i_{L}, der nach Ablauf der Zeit T_{N} einen Nulldurchgang aufweist. Dies ist der optimale Zeitpunkt für die Abschaltung der Ladespannung, da ohne Stromfluss natürlich auch keine Gegeninduktionsspannung zu erwarten ist.

Allgemein kann also die Aussage getroffen werden, dass es zum Erreichen einer kurzen Zeitdauer des Lademodus vorteilhaft ist, die Ladespannung im Lademodus wenigstens einmal umzupolen, um einen Nulldurchgang des Ladestroms i_{L} herbeizuführen, der als Auslöser für die Abschaltung der Ladespannung genutzt wird.

Wie oben bereits erwähnt, ist der Auswerteeinheit 45 des Positionsmessgeräts 10 das Ausgangssignal des Empfängerbausteins 20.2 der Kommunikationseinheit 20 zugeführt. Da dieser die Differenzspannungen auf dem Leitungspaar 110 in einfache digitale Signale umwandelt, weist er auch den verschiedenen Polaritäten der Ladespannung verschiedene logische Pegel zu. Die Auswerteeinheit 45 kann deshalb durch Auswertung des zeitlichen Verlaufs der digitalen Signale das Ende des Lademodus erkennen, da sich die Zeitdauern der Phase T_{P} und der Phase T_{N} des Lademodus sowohl voneinander, als auch deutlich von den Pulsdauern der Datenübertragungssignale im Kommunikationsmodus unterscheiden. So können zur Vorbereitung des Kommunikationsmodus abgeschaltete Einheiten der Positionserfassungseinheit 40 wieder eingeschaltet, bzw. der Stromsparmodus beendet werden.

Alternativ könnten der Auswerteeinheit 45 die Signale zwischen den Leitungen des Leitungspaars 110 (also der Ladespannung im Lademodus, bzw. der Datensignale im Kommunikationsmodus) direkt zugeführt und das Ende des Lademodus durch Auswertung der Spannungspegel erkannt werden.

Der Zeitpunkt, an dem vom Kommunikationsmodus in den Lademodus umgeschaltet werden kann, wird vom Ende der Datenübertragung bestimmt. Dieses kann anhand des Datenübertragungsprotokolls der verwendeten Schnittstelle präzise festgestellt werden, das sowohl der zentralen Verarbeitungseinheit 150 der Steuerungseinheit 100, als auch der Positionserfassungseinheit 40 bekannt ist.

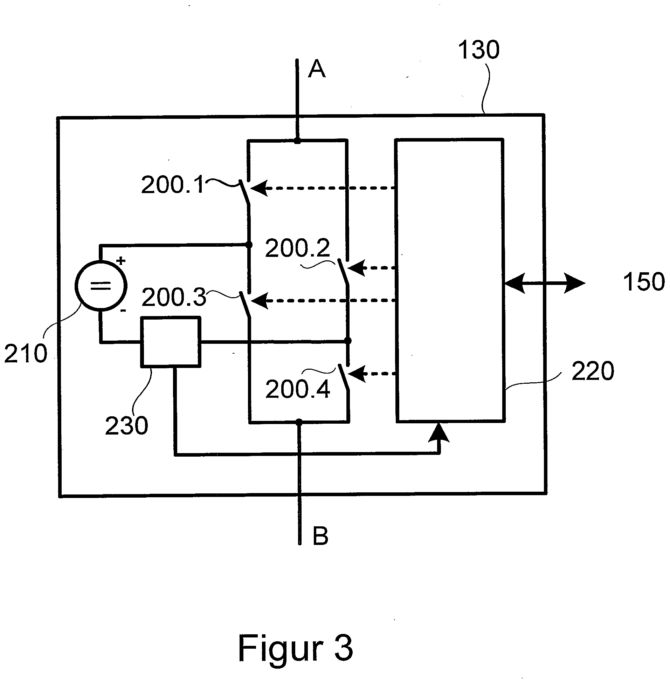

Figur 3 zeigt ein Blockschaltbild einer Ladeeinheit 130, die geeignet ist, den in Figur 2 beschriebenen Signalverlauf eines Lademodus zu erzeugen, bzw. das zugrundeliegende Verfahren durchzuführen. Sie kann beispielsweise in Figur 1 eingefügt werden.

Um eine Ladespannung in verschiedenen Polaritäten zum Leitungspaar 110 schalten zu können, sind Schaltmittel in Form von vier Schaltelementen 200.1, 200.2, 200.3, 200.4 vorgesehen. Sie sind so verschaltet, dass der Pluspol und der Minuspol einer Spannungsquelle 210 jeweils zu einem Ausgang A und B geschaltet werden kann. Da in geöffnetem Zustand der Schaltelemente 200.1, 200.2, 200.3, 200.4 die Ladeeinheit 130 vom Leitungspaar 110 getrennt ist, kann ggf. auf die in Figur 1 dargestellten Schaltelemente 120.1, 120.2 vollständig verzichtet werden. Ist es jedoch notwendig, im Lademodus die Kommunikationseinheit 135 vom Leitungspaar 110 zu trennen, sind entsprechende Schaltelemente 120.1, 120.2 zwischen Kommunikationseinheit 135 und Leitungspaar 110 vorzusehen. In einer vorteilhaften Realisierung sind die Schaltelemente als MOSFET-Transistoren ausgeführt, die zu einer bekannten H-Brückenschaltung verschaltet sind. Die Schaltelemente 200.1, 200.2, 200.3, 200.4 werden von einer Ladekontrolleinheit 220 über entsprechende Steuerleitungen je nach benötigter Polarität der Ladespannung angesteuert.

Zwischen einen der zwei Ausgänge der Spannungsquelle 210, vorzugsweise dem Minuspol, der üblicherweise auf einem Bezugspotential der Steuerungseinheit 100 liegt, und dem entsprechenden Anschluss an der H-Brückenschaltung ist ein Nulldurchgangsdetektor 230 geschaltet. Kriterium für einen Stromnulldurchgang kann beispielsweise die Feststellung einer Umkehrung der Stromrichtung sein, oder das Unterschreiten eines Spannungsabfalls an einem Strommesswiderstand, der in Reihe zum Ausgang der Spannungsquelle geschaltet ist. Wird ein Stromnulldurchgang detektiert, so wird dies der Ladekontrolleinheit 220 signalisiert.

Der Ladevorgang im Lademodus kann somit wie folgt zusammengefasst werden:
- Nach Ende des Kommunikationsmodus signalisiert die Verarbeitungseinheit 150 der Ladekontrolleinheit 220 den Beginn des Lademodus und schaltet ggf. die Schaltelemente 120.1, 120.2 so, dass die Ladeeinheit 130 mit dem Leitungspaar 110 verbunden ist.
- Die Ladekontrolleinheit 220 schaltet die Spannungsquelle 210 durch entsprechende Ansteuerung der Schaltelemente 200.1, 200.2, 200.3, 200.4 in einer ersten Polarität auf die Ausgänge A und B.
- Nach einer definierten Zeit T_{P} schaltet die Ladekontrolleinheit 220 über die Schaltelemente 200.1, 200.2, 200.3, 200.4 die Polarität der Spannungsquelle um.
- Nachdem der Nulldurchgangsdetektor 230 einen Stromnulldurchgang angezeigt hat, schaltet die Ladekontrolleinheit 220 durch Öffnen der Schaltelemente 200.1, 200.2, 200.3, 200.4 die Ladespannung aus und signalisiert der Verarbeitungseinheit 150 das Ende des Lademodus. Diese trennt ggf. das Leitungspaar 110 von der Ladeeinheit 130.

Die vorliegende Erfindung ist besonders geeignet für Positionsmessgeräte 10, die als sog. Motordrehgeber ausgeführt sind und direkt in Elektromotoren eingebaut werden, um die Winkelposition und/oder Umdrehungsgeschwindigkeit der Motorwelle zu messen. Da für den Betrieb des Positionsmessgeräts 10 nur noch ein Leitungspaar 110 erforderlich ist, ist es sehr leicht möglich, dieses Leitungspaar 110, ggf. mit einer Abschirmung versehen, in das Motorkabel zu integrieren, das für die Ansteuerung des Elektromotors sowieso benötigt wird. Ein separates Kabel für das Positionsmessgerät 10 kann also eingespart werden. Dadurch, dass trotz Minimierung der für die Kommunikation benötigten Leitungen auf ein Leitungspaar 110 eine störsichere differentielle Datenübertragung realisiert werden kann, wird auch im kritischen Umfeld des Motorkabels eine hohe Datenübertragungssicherheit auch bei großen Kabellängen erreicht.

Selbstverständlich ist die vorliegende Erfindung aber nicht auf dieses Anwendungsgebiet beschränkt, sondern kann auch in anderen Bereichen eingesetzt werden.

## Patentansprüche

1. Vorrichtung zur Übertragung von Energie und Daten zwischen einer Steuerungseinheit (100) und einem Positionsmessgerät (10) über ein Leitungspaar (110), wobei die Übertragung von Energie in einem Lademodus und die Übertragung von Daten in einem Kommunikationsmodus erfolgt, wobei im Positionsmessgerät (10) ein Energiespeicher (15) vorgesehen ist, der im Lademodus über das Leitungspaar (110) aufladbar ist und mit dem das Positionsmessgerät (10) im Kommunikationsmodus mit Energie versorgbar ist und in der Steuerungseinheit (100) eine Ladeeinheit (130) vorgesehen ist, sowie Schaltmittel (120.1, 120.2; 200.1, 200.2, 200.3, 200.4), über die im Lademodus die Ladeeinheit (130) mit dem Leitungspaar (110) zweipolig verbindbar ist, wobei in der Ladeeinheit (130) eine Ladekontrolleinheit (220) angeordnet ist, sowie Schaltelemente (200.1, 200.2, 200.3, 200.4), die von der Ladekontrolleinheit (220) so ansteuerbar sind, dass die Spannung einer Spannungsquelle (210) zum Aufladen des Energiespeichers (15) in zwei Polaritäten ausgebbar ist, **dadurch gekennzeichnet, dass** in der Ladeeinheit (130) ein Nulldurchgangsdetektor (230) angeordnet ist, mit dem ein Stromnulldurchgang des Ladestroms (i_{L}) feststellbar und an die Ladekontrolleinheit (220) signalisierbar ist.

2. Vorrichtung nach Anspruch 1, **dadurch gekennzeichnet, dass** im Positionsmessgerät (10) zwischen dem Energiespeicher (15) und dem Leitungspaar (110) eine Gleichrichtereinheit (25) angeordnet ist.

3. Vorrichtung nach einem der vorhergehenden Ansprüche, **dadurch gekennzeichnet, dass** im Positionsmessgerät (10) weiter eine Auswerteeinheit (45) angeordnet ist, mit der durch Auswertung der Spannungspegel oder des zeitlichen Verlaufs der Signale zwischen den Leitungen des Leitungspaars (110) das Ende des Lademodus feststellbar ist.

4. Verfahren zur Übertragung von Energie und Daten zwischen einer Steuerungseinheit (100) und einem Positionsmessgerät (10) über ein Leitungspaar (110), wobei die Übertragung von Energie in einem Lademodus und die Übertragung von Daten in einem Kommunikationsmodus erfolgt, wobei im Positionsmessgerät (10) ein Energiespeicher (15) vorgesehen ist, der im Lademodus über das Leitungspaar (110) aufgeladen wird und mit dem das Positionsmessgerät (10) im Kommunikationsmodus mit Energie versorgt wird und in der Steuerungseinheit (10) eine Ladeeinheit (130) vorgesehen ist, sowie Schaltmittel (120.1, 120.2; 200.1, 200.2, 200.3, 200.4), über die im Lademodus die Ladeeinheit (130) mit dem Leitungspaar (110) zweipolig verbunden wird, wobei in der Ladeeinheit (130) eine Ladekontrolleinheit (220) angeordnet ist, sowie Schaltelemente (200.1, 200.2, 200.3, 200.4), die von der Ladekontrolleinheit (220) so angesteuert werden, dass die Ladespannung, die die Ladeeinheit (130) zum Aufladen des Energiespeichers (15) ausgibt, in jedem Lademodus wenigstens einmal umgepolt wird, **dadurch gekennzeichnet, dass** in der Ladeeinheit (130) ein Nulldurchgangsdetektor (230) angeordnet ist, mit dem ein durch das Umpolen der Ladespannung hervorgerufener Stromnulldurchgang des Ladestroms (i_{L}) festgestellt und an die Ladekontrolleinheit (220) signalisiert wird.

5. Verfahren nach Anspruch 4, **dadurch gekennzeichnet, dass** am Ende des Lademodus das Leitungspaar (110) mit Hilfe der Schaltmittel (120.1, 120.2; 200.1, 200.2, 200.3, 200.4) wieder von der Ladeeinheit (130) getrennt wird.

6. Verfahren nach einem der Ansprüche 4 oder 5, **dadurch gekennzeichnet, dass** im Positionsmessgerät (10) weiter eine Auswerteeinheit (45) angeordnet ist, mit der durch Auswertung der Spannungspegel oder des zeitlichen Verlaufs der Signale zwischen den Leitungen des Leitungspaars (110) das Ende des Lademodus festgestellt wird.

## Claims

1. Apparatus for transferring energy and data between a control unit (100) and a position measuring device (10) by means of a line pair (110), wherein energy is transferred in a charging mode and data is transferred in a communication mode, wherein an energy store (15) is provided in the position measuring device (10), said energy store being able to be charged in the charging mode by means of the line pair (110) and being able to be used to supply the position measuring device (10) with energy in the communication mode, and, in the control unit (100), a charging unit (130) is provided, as well as switching means (120.1, 120.2; 200.1, 200.2, 200.3, 200.4), by means of which switching means the charging unit (130) is able to be connected using two poles to the line pair (110) in the charging mode, wherein, in the charging unit (130), a charging control unit (220) is arranged, as well as switching elements (200.1, 200.2, 200.3, 200.4), which switching elements are able to be driven by the charging control unit (220) in such a way that the voltage of a voltage source (210) is able to be output in two polarities to charge the energy store (15), **characterized in that** a zero crossing detector (230) is arranged in the charging unit (130), said zero crossing detector being able to be used to determine a current zero crossing of the charge current (i_{L}) and to signal said current zero crossing of the charge current to the charging control unit (220).

2. Apparatus according to Claim 1, **characterized in that** a rectifier unit (25) is arranged in the position measuring device (10) between the energy store (15) and the line pair (110).

3. Apparatus according to either of the preceding claims, **characterized in that** an evaluation unit (45) is furthermore arranged in the position measuring device (10), said evaluation unit being able to be used to determine the end of the charging mode by evaluating the voltage level or the time profile of the signals between the lines of the line pair (110).

4. Method for transferring energy and data between a control unit (100) and a position measuring device (10) by means of a line pair (110), wherein energy is transferred in a charging mode and data is transferred in a communication mode, wherein an energy store (15) is provided in the position measuring device (10), said energy store being charged in the charging mode by means of the line pair (110) and being used to supply the position measuring device (10) with energy in the communication mode, and, in the control unit (100), a charging unit (130) is provided, as well as switching means (120.1, 120.2; 200.1, 200.2, 200.3, 200.4), by means of which switching means the charging unit (130) is connected using two poles to the line pair (110) in the charging mode, wherein, in the charging unit (130), a charging control unit (220) is arranged, as well as switching elements (200.1, 200.2, 200.3, 200.4), which switching elements are driven by the charging control unit (220) in such a way that the charge voltage that the charging unit (130) outputs to charge the energy store (15) has its polarity reversed at least once in each charging mode, **characterized in that** a zero crossing detector (230) is arranged in the charging unit (130), said zero crossing detector being used to determine a current zero crossing of the charge current (i_{L}) caused by the polarity reversal of the charge voltage and to signal said current zero crossing of the charge current to the charging control unit (220).

5. Method according to Claim 4, **characterized in that**, at the end of the charging mode, the line pair (110) is isolated from the charging unit (130) again with the aid of the switching means (120.1, 120.2; 200.1, 200.2, 200.3, 200.4).

6. Method according to either of Claims 4 and 5, **characterized in that** an evaluation unit (45) is furthermore arranged in the position measuring device (10), said evaluation unit being used to determine the end of the charging mode by evaluating the voltage level or the time profile of the signals between the lines of the line pair (110).

## Revendications

1. Dispositif de transmission d'énergie et de données entre une unité de commande (100) et un appareil de mesure de position (10) par le biais d'une paire de lignes (110), la transmission d'énergie s'effectuant dans un mode de charge et la transmission de données dans un mode de communication, un accumulateur d'énergie (15) se trouvant dans l'appareil de mesure de position (10), lequel peut être chargé par le biais de la paire de lignes (110) en mode de charge et avec lequel l'appareil de mesure de position (10) peut être alimenté en énergie dans le mode de communication et une unité de charge (130) se trouvant dans l'unité de commande (100), ainsi que des moyens de commutation (120.1, 120.2 ; 200.1, 200.2, 200.3, 200.4) par le biais desquels, en mode de charge, l'unité de charge (130) peut être reliée de marnière bipolaire à la paire de lignes (110), une unité de contrôle de charge (220) étant disposée dans l'unité de charge (130), ainsi que des éléments de commutation (200.1, 200.2, 200.3, 200.4) qui peuvent être excités par l'unité de contrôle de charge (220) de telle sorte que la tension d'une source de tension (210) destinée à charger l'accumulateur d'énergie (15) peut être délivrée en deux polarités, **caractérisé en ce qu'**un détecteur de passage par zéro (230) est disposé dans l'unité de charge (130), lequel permet de constater un passage par zéro du courant de charge (i_{L}) et de le signaler à l'unité de contrôle de charge (220).

2. Dispositif selon la revendication 1, **caractérisé en ce qu'**une unité de redressement (25) est disposée dans l'appareil de mesure de position (10), entre l'accumulateur d'énergie (5) et la paire de lignes (110).

3. Dispositif selon l'une des revendications précédentes, **caractérisé en ce qu'**une unité d'interprétation (45) est en outre disposée dans l'appareil de mesure de position (10), laquelle permet de constater la fin du mode de charge par une interprétation du niveau de tension ou de la courbe dans le temps des signaux entre les lignes de la paire de lignes (110).

4. Procédé de transmission d'énergie et de données entre une unité de commande (100) et un appareil de mesure de position (10) par le biais d'une paire de lignes (110), la transmission d'énergie s'effectuant dans un mode de charge et la transmission de données dans un mode de communication, un accumulateur d'énergie (15) se trouvant dans l'appareil de mesure de position (10), lequel est chargé par le biais de la paire de lignes (110) en mode de charge et avec lequel l'appareil de mesure de position (10) est alimenté en énergie dans le mode de communication et une unité de charge (130) se trouvant dans l'unité de commande (100), ainsi que des moyens de commutation (120.1, 120.2 ; 200.1, 200.2, 200.3, 200.4) par le biais desquels, en mode de charge, l'unité de charge (130) est reliée de manière bipolaire à la paire de lignes (110), une unité de contrôle de charge (220) étant disposée dans l'unité de charge (130), ainsi que des éléments de commutation (200.1, 200.2, 200.3, 200.4) qui sont excités par l'unité de contrôle de charge (220) de telle sorte que la tension de charge qui est délivrée par l'unité de charge pour charger l'accumulateur d'énergie (15) est au moins une fois inversée en polarité dans chaque mode de charge, **caractérisé en ce qu'**un détecteur de passage par zéro (230) est disposé dans l'unité de charge (130), avec lequel est constaté un passage par zéro du courant de charge (i_{L}), provoqué par l'inversion de polarité de la tension de charge, et signalé à l'unité de contrôle de charge (220).

5. Procédé selon la revendication 4, **caractérisé en ce qu'**à la fin du mode de charge, la paire de lignes (110) est de nouveau déconnectée de l'unité de charge (130) à l'aide des moyens de commutation (120.1, 120.2 ; 200.1, 200.2, 200.3, 200.4).

6. Procédé selon l'une des revendications 4 ou 5, **caractérisé en ce qu'**une unité d'interprétation (45) est en outre disposée dans l'appareil de mesure de position (10), avec laquelle est constatée la fin du mode de charge par une interprétation du niveau de tension ou de la courbe dans le temps des signaux entre les lignes de la paire de lignes (110).
